# EUROPEAN PATENT SPECIFICATION

(11) **EP 0 761 045 B1**
(45) Date of publication and mention of the grant of the patent: **17.07.2002**
(21) Application number: 95920091.6
(22) Date of filing: 23.05.1995
(51) Int. Cl.: H04B 7/06

(54) **A METHOD FOR IMPROVING CONNECTION QUALITY IN A CELLULAR RADIO SYSTEM, AND A BASE STATION**
VERFAHREN ZUR ERHÖHUNG DER QUALITÄT DER VERBINDUNGEN IN EINER ZELLULAREN FUNKÜBERTRAGUNGSANORDNUNG UND BASISSTATION DAFÜR
PROCEDE PERMETTANT L'AMELIORATION DE LA QUALITE DES LIAISONS DANS UN SYSTEME DE RADIOCOMMUNICATIONS CELLULAIRE, ET STATION DE BASE ASSOCIEE

(30) Priority: 24.05.1994 FI 942404
(43) Date of publication of application: 12.03.1997
(73) Proprietor: Nokia Corporation, 02150 Espoo (FI)
(72) Inventor: HEIKKINEN, Eero, FIN-90540 Oulu (FI); KIISKI, Matti, FIN-90460 Oulunsalo (FI)
(74) Representative: Dahlström, Karl Krister
(86) International application number: FI9500283
(87) International publication number: WO9532558

(56) References cited:
- EP-A- 0 668 668
- WO-A-88/08650
- CH-A- 682 195
- DE-A- 4 236 089

## Description

The present invention relates to a method for improving connection quality in a cellular radio system, which system comprises in each cell at least one base station, which communicates with the subscriber terminal equipments located within its area, and which sends out transmissions by using at least one carrier frequency, and in which system the signal transmitted at each frequency is divided on the time division principle into a frame consisting of several time slots, and which base stations transmit information on themselves to the subscriber terminal equipments.

In cellular radio systems, the speech or data information of a user between a base station and a subscriber terminal equipment is transmitted by using a traffic channel. In addition, several control messages and system information are required between the terminal equipment and the base station. In order for this type of information to be transmitted, dedicated control channels are required. In the GSM system, for instance, the BCCH channel is used for transmitting call set-up information from a base station to terminal equipments.

In cellular radio systems, the quality of the radio channel between a base station and a subscriber terminal equipment varies as a function of place and time. The field generated by a base station antenna does not attenuate homogeneously according to distance, but the field strength varies depending on the location even if the distance from the antenna remains the same. These variations are due to the fact that the transmitting and receiving antennas are not often within direct sight with each other, but there are obstructions caused by the terrain or buildings in the line of sight. The environment thus causes fades and reflections to a transmitted signal, and the signal received by a subscriber terminal equipment is often a sum of signal components propagated along several different paths. Local variations in signal strength may be extremely great.

Local fades in field strength cause calls to be interrupted in the present-day cellular radio systems as connection quality suddenly deteriorates, and failed call set-up attempts, of which there may be 5 - 10% of all cases.

In the network planning of cellular radio systems, local variations in field strength must be taken into account in order to be able to minimize call interruptions and call set-up problems. The solution according to prior art is to increase the transmission power of a cell if the cell contains fade areas, or to increase the number of transmitters in problematic areas. Most often, the transmission power of a cell is increased to exceed the power required in normal areas in order to obtain satisfactory field strength in fade areas. However, this leads to the fact that the field is even unnecessarily strong in good areas and that the reuse of frequencies is complicated, as a result of which the total capacity of the system is decreased.

A method for avoiding fades is to use frequency hopping in the system, different time slots being thus transmitted at different frequencies according to a predetermined sequence. Frequency hopping is, however, expensive to implement, and in addition, it cannot however be always used, as for instance in the GSM system at the frequency where BCCH information is transmitted.

Patent documents WO 88/08650 and DE 4236089 present solutions where a prurality of antennas are used when transmitting signals to mobile stations.

The object of the present invention is thus to enable better connection quality in fade areas without the above-mentioned disadvantages and heavy expenses.

This is achieved with the method described in the introduction, characterized in that the antenna via which the signal intended for the terminal equipments of a base station is transmitted is changed on the time division principle in such a manner that successive frames are transmitted via different antennas and that the antenna used at each time instant is randomly selected.

The invention further relates to a base station, intended to be used in a cellular radio system comprising in each cell at least one base station, which communicates with the subscriber terminal equipments located within its area, and which sends out transmissions by using at least one carrier frequency using a prurality of transmitting antennas, and in which system the signal transmitted at each frequency is divided on the time division principle into a frame consisting of several time slots, and which base station transmits information on itself to the subscriber terminal equipments. The base station of the invention is characterized in that the base station comprises means for changing the antenna via which the signal intended for the terminal equipments of the base station is transmitted, on the time division principle in such a manner that successive frames are transmitted via different antennas and that the antenna used at each time instant is randomly selected.

The method of the invention is based on the fact that antennas situated in different locations produce different fields, i.e. the minimums of field strength are not produced in the same locations, because the signals originating from antennas situated in different locations do not propagate along the same path. The method of the invention differs from the conventional antenna diversity in that at each time instant, the signal is transmitted from only one antenna at a time. The antenna used at a given moment is changed at predetermined time instants. According to the preferred embodiment of the invention, one entire frame is transmitted from each antenna, after which the antenna is changed. The invention can be applied particularly advantageously in the GSM system at the frequency where the BCCH signal is transmitted. According to the second embodiment of the invention, the antenna is changed at each time slot.

In the following, the invention will be described in more detail with reference to the examples according to the accompanying drawings, in which
Figure 1 shows a cellular radio system in which the method of the invention can be applied,
Figure 2 illustrates the structure of a TDMA frame of the GSM system,
Figure 3 illustrates the structure of the base station of the invention by means of a block diagram.

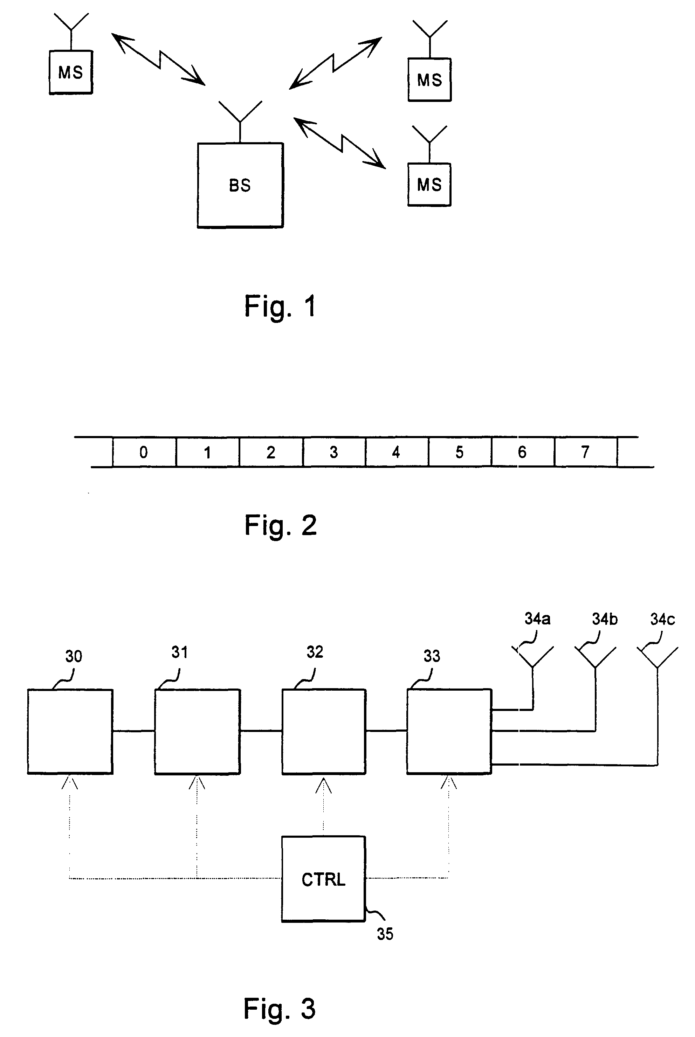

Figure 1 illustrates a cellular radio system in which the method of the invention can be applied. The cellular radio system comprises in each cell at least one base station BS, which communicates with the subscriber terminal equipments MS located within its area. Speech and data traffic are handled by using a traffic channel, and control messages are transmitted by using control channels. The method of the invention can be applied in any cellular radio system employing the time division TDMA multiple access method. In the following, the invention will be described as applied in the GSM system, without restricting the invention to it, however.

In the GSM system, a TDMA frame comprises eight time slots. The structure of the frame is illustrated in Figure 2. The time slots of the frame are numbered from 1 to 7. Several carrier frequencies may be used in one cell. A GSM cell always employs one carrier frequency at which the first time slot of the TDMA frame, this time slot being indicated by numeral 0, is used for transmitting call set-up information, i.e. the BCCH channel, from a base station to subscriber terminal equipments. The base station also uses the same time slot for acknowledging a call set-up signal transmitted by a terminal equipment. While in idle mode, terminal equipments monitor the BCCH channel. They must always be aware of the frequency at which the BCCH signal is transmitted. Accordingly, there is no frequency hopping at the BCCH carrier frequency.

The method of the invention employs two or more antennas, which are connected with a base station transmitter. The signal to be transmitted is transmitted via one antenna at a time, but the antenna to be used is changed either randomly or according to a predetermined sequence. The field strength of the signal received by a terminal equipment thus varies according to the variation of the transmitting antenna, and the probability that the terminal equipment is constantly exposed to fades is significantly reduced. This is based on the fact that since the signals transmitted from antennas situated in different locations arrive along different paths to the terminal equipment, they attenuate in different ways. If a signal arriving via one antenna has faded, signals transmitted via the other antennas have probably not faded. The error correction methods used in the cellular radio systems, interleaving and coding are able to correct possibly missing or low-quality frames in a received signal, if there are not many of this type of frames arriving successively.

In the preferred embodiment of the invention, the method is applied at the carrier frequency where the BCCH signal is transmitted in the first time slot. According to the method, a base station transmits one frame by using the same antenna, after which the transmitting antenna is changed for the period required by the subsequent frame. The successful reception of call set-up signals is thus improved. As measured in terms of bit errors, the quality of a signal received by a terminal equipment is improved by 3 dBc when two antennas are used and by 5 dBc when three antennas are used in a typical city environment, in the case of a slow-moving terminal equipment.

In the second embodiment of the method of the invention, the antenna is changed time slot-specifically, i.e. at each time slot the antenna is changed either randomly or according to a sequence in such a manner that in successive frames, the same time slots are transmitted via different antennas. In this case, where the antenna is thus changed connection-specifically, the quality measurement of the connection between a subscriber terminal equipment and a base station can be utilized when selecting the transmitting antenna, either in the base station or the terminal equipment. The base station which receives a signal from a subscriber terminal equipment with several antennas can measure the quality of a signal received with each antenna and select the transmitting antenna on the basis of this information.

In the second embodiment of the method of the invention, the quality measurement performed by a subscriber terminal equipment is utilized. The terminal equipment constantly reports information on the connection quality to the base station, and the base station can use the antenna with the use of which the connection quality is better. In practice, this can be implemented in the case of two antennas, for instance, in such a manner that the base station sends out a transmission for a period of three successive time slots with the first antenna and for a period of three time slots with the second antenna, and receives the connection quality measurements reported by the terminal equipment. On the basis of this information, the base station sees which antenna provides a better connection and emphasizes this antenna in future by transmitting for instance four successive time slots with the better antenna and two time slots with the worse antenna, until the measurement results show that the emphasizing of the antennas should be changed. With this type of connection-specific use, the benefit gained in connection quality on each traffic channel is in the range of 4 - 6 dBc.

The structure of the base station of the invention is illustrated by means of a block diagram in Figure 3. The base station of the invention comprises means 30 for generating a baseband signal, the output signal of these means being applied to modulating means 31, from which the carrier frequency signal is applied to an output amplifier 32. The base station of the invention further comprises means 33, by which the antenna used at each time instant can be selected from the available antennas 34a - 34c. The base station of the invention comprises more than one antennas. The number of the antennas is not restricted; the more antennas are used, the better performance is achieved. The base station also comprises means 35, by means of which the above-mentioned components are controlled. The means 35 also control the switching means 33 in such a manner that at each time instant, a desired antenna sends out a transmission. The switching means 33 are synchronized with the frame structure of the signal to be transmitted. The switching means 33 can also be located before the output amplifier 32. The base station of the invention may also comprise more than one baseband and modulating means, the signals of which are combined before the output amplifier 32.

Naturally, the base station to be implemented also comprises other components, such as filters and converters, but since they are not essential as regards the invention, they are not shown in the figure for the sake of simplicity.

Even if the invention has been described above with reference to the examples according to the accompanying drawings, it will be apparent that the invention is not so restricted but it can be modified in various ways within the scope of the inventive concept disclosed in the appended claims.

## Claims

1. A method for improving connection quality in a cellular radio system, which system comprises in each cell at least one base station (BS), which communicates with the subscriber terminal equipments (MS) located within its area, and which sends out transmissions by using at least one carrier frequency using a plurality of transmitting antennas, and in which system the signal transmitted at each frequency is divided on the time division principle into a frame consisting of several time slots, and which base stations transmit information on themselves to the subscriber terminal equipments, wherein the antenna via which the signal intended for the terminal equipments of a base station is transmitted is changed on the time division principle in such a manner that the base station sends out information via one antenna at a time and that successive frames are transmitted via different antennas **characterized in that** the antenna used at each time instant is randomly selected.

2. A method according to claim 1, **characterized in that** the change of the antenna to be used is applied at the carrier frequency where a base station (BS) transmits information on itself to subscriber terminal equipments (MS).

3. A base station, intended to be used in a cellular radio system comprising in each cell at least one base station (BS), which communicates with the subscriber terminal equipments (MS) located within its area, and which sends out transmissions by using at least one carrier frequency using a plurality of transmitting antennas, and in which system the signal transmitted at each frequency is divided on the time division principle into a frame consisting of several time slots, and which base station transmits information on itself to the subscriber terminal equipments, wherein the base station comprises means (33, 35) for changing the antenna via which the signal intended for the terminal equipments of the base station is transmitted, on the time division principle in such a manner that the base station sends out information via one antenna at a time and that successive frames are transmitted via different antennas **characterized in that** the antenna used at each time instant is randomly selected.

## Patentansprüche

1. Verfahren zur Erhöhung der Verbindungsqualität in einem zellularen Funksystem, wobei das System in jeder Zelle zumindest eine Basisstation (BS) aufweist, die mit den innerhalb ihres Sendebereichs befindlichen Teilnehmerendgeräten (MS) kommuniziert, und die Sendungen unter Verwendung von zumindest einer Trägerfrequenz unter Verwendung einer Vielzahl von Sendeantennen aussendet, und wobei in dem System das bei jeder Frequenz gesendete Signal beruhend auf dem Zeitmultiplexprinzip in einen aus mehreren Zeitschlitzen bestehenden Rahmen unterteilt ist, und wobei die Basisstationen Informationen über sich selbst an die Teilnehmerendgeräte senden, wobei die Antenne, über die das für die Endgeräte bestimmte Signal einer Basisstation gesendet wird, beruhend auf dem Zeitmultiplexverfahren auf eine solche Weise gewechselt wird, dass die Basisstation Informationen über eine Antenne gleichzeitig aussendet, und dass aufeinanderfolgende Rahmen über unterschiedliche Antennen gesendet werden, **dadurch gekennzeichnet, dass** die zu jedem Zeitpunkt verwendete Antenne zufällig ausgewählt wird.

2. Verfahren nach Anspruch 1, **dadurch gekennzeichnet, dass** der Wechsel der zu verwendenden Antenne bei der Trägerfrequenz eingesetzt wird, auf der eine Basisstation (BS) Informationen über sich selbst zu Teilnehmerendgeräten (MS) sendet.

3. Basisstation, die zur Verwendung in einem zellularen Funksystem vorgesehen ist, wobei das Funksystem in jeder Zelle zumindest eine Basisstation (BS) aufweist, die mit den innerhalb ihres Sendebereichs befindlichen Teilnehmerendgeräten (MS) kommuniziert und die Sendungen unter Verwendung zumindest einer Trägerfrequenz unter Verwendung einer Vielzahl von Sendeantennen aussendet, und wobei bei dem System das bei jeder Frequenz gesendete Signal beruhend auf dem Zeitmultiplexprinzip in einen aus mehreren Zeitschlitzen bestehenden Rahmen unterteilt ist, und wobei die Basisstation Informationen über sich selbst an die Teilnehmerendgeräte sendet, wobei die Basisstation Einrichtungen (33, 35) zum Wechseln der Antenne aufweist, über die das für die Endgeräte bestimmte Signal der Basisstation gesendet wird, beruhend auf dem Zeitmultiplexprinzip, wobei dies auf eine Weise erfolgt, dass die Basisstation Informationen über eine Antenne gleichzeitig aussendet, und dass aufeinanderfolgende Rahmen über unterschiedliche Antennen gesendet werden, **dadurch gekennzeichnet, dass** die zu jedem Zeitpunkt verwendete Antenne zufällig ausgewählt wird.

## Revendications

1. Procédé pour améliorer la qualité des connexions dans un système radiotéléphonique cellulaire, lequel système comprend dans chaque cellule au moins une station de base (BS) qui communique avec les équipements terminaux (MS) d'abonnés situés dans la zone qu'elle dessert et qui émet en utilisant au moins une fréquence porteuse à l'aide de plusieurs antennes émettrices, et système dans lequel le signal émis à chaque fréquence est divisé suivant le principe de répartition dans le temps en une trame constituée par plusieurs tranches de temps, et lesquelles stations de base transmettent aux équipements terminaux d'abonnés des informations sur eux-mêmes, lorsque l'antenne par l'intermédiaire de laquelle le signal destiné aux équipements terminaux d'une station de base est transmis est changée suivant le principe de la répartition dans le temps de façon que la station de base envoie des informations par l'intermédiaire d'une seule antenne à la fois et que des trames successives soient transmises par l'intermédiaire d'antennes différentes, **caractérisé en ce que** l'antenne utilisée à chaque instant est sélectionnée au hasard.

2. Procédé selon la revendication 1, **caractérisé en ce que** le changement de l'antenne à utiliser est appliqué à la fréquence porteuse où une station de base (BS) transmet des informations sur elle-même aux équipements terminaux (MS) d'abonnés.

3. Station de base destinée à être utilisée dans un système radiotéléphonique cellulaire comprenant dans chaque cellule au moins une station de base (BS) qui communique avec les équipements terminaux (MS) d'abonnés situés dans la zone qu'elle dessert et qui envoie des transmissions en utilisant au moins une fréquence porteuse à l'aide de plusieurs antennes émettrices, et système dans lequel le signal émis à chaque fréquence est divisé suivant le principe de répartition dans le temps en une trame constituée de plusieurs tranches de temps, et laquelle station de base transmet des informations sur elle-même aux équipements terminaux d'abonnés, la station de base comprenant des moyens (33, 35) pour changer l'antenne par l'intermédiaire de laquelle est transmis le signal destiné aux équipements terminaux de la station de base, suivant le principe de la répartition dans le temps de façon que la station de base envoie des informations par l'intermédiaire d'une seule antenne à la fois et que des trames successives soient transmises par l'intermédiaire d'antennes différentes, **caractérisée en ce que** l'antenne utilisée à chaque instant est sélectionnée au hasard.
